# EUROPEAN PATENT SPECIFICATION

(11) **EP 2 894 210 B1**
(45) Date of publication and mention of the grant of the patent: **28.03.2018**
(21) Application number: 13835060.8
(22) Date of filing: 12.07.2013
(51) Int. Cl.: C09K 11/08, C09K 11/02, B41M 5/00

(54) **MARKING COMPOSITION BASED ON INORGANIC LUMINOPHORES, METHOD FOR MARKING METAL ITEMS AND METAL ITEM**
MARKIERUNGSZUSAMMENSETZUNG AUF BASIS VON ANORGANISCHEN LEUCHTSTOFFEN, VERFAHREN ZUR MARKIERUNG VON METALLARTIKELN UND METALLARTIKEL
COMPOSITION DE MARQUAGE À BASE DE LUMINOPHORES INORGANIQUES, PROCÉDÉ DE MARQUAGE D'ARTICLES EN MÉTAL ET ARTICLE EN MÉTAL

(30) Priority: 07.09.2012 RU 2012138273
(43) Date of publication of application: 15.07.2015
(73) Proprietor: Joint Stock Company "Goznak", St. Petersburg 197046 (RU)
(72) Inventor: TRACHUK, Arkadiy Vladimirovich, St.Petersburg 199004 (RU); KURYATNIKOV, Andrey Borisovich, Moscow 129128 (RU); GONCHAROV, Alexey Mikhailovich, Moscow 109451 (RU); KORNILOV, Georgiy Valentinovich, Moscow 117418 (RU); FEDOROVA, Elena Mikhailovna, Moscow 115093 (RU); AKININ, Alexey Borisovich, Moscow 109462 (RU); GONCHAROV, Sergey Nikitovich, Moscow 129128 (RU)
(74) Representative: Hirsch & Associés
(86) International application number: PCT/RU2013/000601
(87) International publication number: WO 2014/038977

(56) References cited:
- WO-A1-01/51575
- WO-A1-91/15553
- RU-C1- 2 057 782
- RU-C1- 2 165 954
- RU-C2- 2 388 054
- DATABASE WPI Week 199503 1995 Thomson Scientific, London, GB; AN 1995-019456 XP002754186, -& JP H06 306315 A (HITACHI MAXELL KK) 1 November 1994 (1994-11-01)
- DATABASE WPI Week 200579 2005 Thomson Scientific, London, GB; AN 2005-770565 XP002754187, -& CN 1 631 581 A (SHANGHAI AUTOMOTIVE CO LTD) 29 June 2005 (2005-06-29)

## Description

### Technical Field

The invention relates to the field of chemistry, in particular to inorganic phosphors, specifically to compositions based on compounds of barium, strontium, magnesium, beryllium, yttrium activated with tin, titanium, manganese, europium, terbium, ytterbium, erbium, and also based on oxides, oxysulfides, borates of yttrium, gadolinium activated with cerium, europium, terbium, praseodymium, ytterbium and erbium, with a binder such as stearic acid, stearates of zinc or of aluminum, or a mixture of fatty acid derivatives with polyatomic phenols, or a mixture of synthetic wax powders and/or paraffin powders added with polyatomic phenols.

This composition is suitable for protection of valuable material objects against counterfeit and theft by introducing a hidden identification mark. The invention also relates to a marking identifiable by performing a special exhibiting procedure, for detecting an object or for revealing a data about it.

The group of inventions includes a composition for marking a metal, a method for marking, and a metal product (hereinafter simply referred to as "product"). In particular, the inventive marking can be employed throughout the bulk of a product or in a portion of the bulk of the product for identification of coins, tokens, medals or constituent parts of devices, assemblies and mechanisms, or spare parts for them, for example, of various vehicles, household appliances, manufactured by powder metallurgy technique with a temperature of sintering in an inert gas atmosphere not more than 900°C.

### Background of the Invention

The most commonly known methods for marking metals are methods for treating finished products when an identification information is applied onto a surface of the product by pressing (stamping), electrochemical treatment or laser exposure. These methods involve the use of a special equipment for applying a marking and are sophisticated as they demand a specific precision of execution.

A method for marking metal products with metal markers containing luminescent components is known. However, this type of marking also involves the application of a marking only onto a surface of the product, and is quite labor intensive since every product is marked manually.

Another method for marking products made by a layer-by-layer manufacture technique, in which a three-dimensional object is manufactured by selective laser sintering or melting, is known (WO 2010/057649, publ. 27.05.2010). The method involves mixing a metal powder that can be used as a construction material with at least one salt of a rare earth metal, wherein the salt has the property of exhibiting luminescence when irradiated with photons having a wavelength outside of the visible spectrum, and subsequently using an energy source with a concentrated treatment energy for sintering or melting the construction powder material.

To avoid strong changes in characteristics of the starting powder, a proportion of the marking component in the mixture does not exceed 20 percent by weight, preferably between 0.1 and 10 percent by weight.

The resultant homogeneous product does not show the presence of the marking therein when illuminated and observed in the visible range.

The marking can be detected when the product is irradiated in ultraviolet (UV), visible and infrared (IR) ranges and is observed in visible and IR ranges. Meanwhile, the marking component can have one or more specific excitation or emission wavelengths in different ranges.

The marked powder can be employed as a construction material in a technique for layer-by-layer manufacture of three-dimensional objects, for example, by selective laser sintering or melting, by selective sintering or melting with electron beam or infrared radiation, and also by a 3D printing method, in which a binder is spray-applied for solidifying the material.

For analysis or identification of the label (mark), it is sufficient to subject the product or its fragments to ultraviolet or infrared irradiation and to determine from the resulting emission a manufacturer, a date of manufacture or from which starting material the product has been manufactured.

The known marking method offers a number of advantages, but, unlike the present invention, the method uses an energy source with a concentrated treatment energy and a small treatment spot, which leads to only a liquid-phase layer-by-layer sintering of the powder material, to a non-uniformity in mechanical properties of the material obtained after sintering in the bulk of the product, and to a change in geometric parameters of the product, therefore the method cannot be used for mass production of products by powder metallurgy technique using the energy source for bulk sintering of the mass of products.

Another method for introducing a security feature in the form of an inorganic phosphor into a material base, i.e. inclusion of an inorganic phosphor in the material composition, is known (RU 2388054, publ. 27.04.2010).

According to this known method, the phosphor can be mixed with a paper pulp in the papermaking process or can be added to a polymeric material during extrusion. In order to enhance stability of the security feature during heat treatment and to increase the level of protection, it is proposed to use inorganic luminescent substances embedded in a matrix representing lattices of inorganic compounds in which rare earth elements are present. Suitable organic compounds such as polymethylmethacrylate, polyethylene, polyvinyl butyrate, polystyrene, polypropylene, etc. can be also used as the matrix.

This method provides a high level of counterfeit protection of documents such as banknotes or checks, security papers made of paper and/or polymers, cards, for example, identification or credit cards, labels for securing luxury goods, etc. Use of a security mark according to this technical solution for identification of metal products subject to heat treatment at a temperature of about 900°C is impossible due to the material used as the matrix has a low ignition temperature.

Document JP H06-306315 A discloses an inorganic phosphor-based composition for marking metal products, said composition including a phosphor (NdP₅O₁₄, LiNdP₄O₁₂ or Al₃Nd(BO₃)₄) and wax powder as binding agent. The inorganic phosphor-based composition is a fluorescent material. It may be used as a distinction mark made on the tip of the minute hand of a watch during the watch production. The tip of the minute hand is irradiated with an infrared ray having a given wavelength capable of exciting the fluorescent material, and fluorescence from the mark is detected to judge the watch to be real.

Thus, no solutions have been found in the prior art that could provide reliable marking of metal products in the manufacturing process thereof by a compaction method followed by sintering at high temperatures commonly used in powder metallurgy.

### Disclosure of the Invention

An objective of the present invention is to provide a method for marking metal products manufactured by powder metallurgy technique, for detecting an object or revealing a data about it.

The objective is attained by an inorganic phosphor-based composition for marking metal products produced by a powder metallurgy technique, said composition comprising a phosphor and a binding/lubricating agent as which a mixture of fatty acid derivatives with polyatomic phenols, or a mixture of synthetic wax powders and/or paraffin powders added with polyatomic phenols is used. A content of the phosphor in the marking composition is no more than 50% by weight of the composition, and a content of the binding agent is in the amount of 50 wt.% or more.

Inorganic phosphors based on phosphates, vanadates and/or silicates of barium, strontium, magnesium, beryllium, yttrium activated with tin, titanium, manganese, europium, terbium, ytterbium, erbium; based on oxides, oxysulfides, borates of yttrium, gadolinium activated with cerium, europium, terbium, praseodymium, ytterbium and erbium, can be used as a marking component in the marking composition.

These inorganic phosphors have a thermal stability over 1000°C and do not react with powders of metals used for manufacturing the products.

Examples illustrating excitation and emission ranges of the above phosphor classes are listed below:
- excitation in the UV range - emission in the visible spectral range. These properties are inherent to a calcium phosphate activated with Cs of the formula Ca₃(PO₄)₂:Cs;
- excitation in the UV range - emission in the IR range. These properties are inherent to a neodymium oxysulfide activated with rare earth elements of the formula Nd₂O₂S:Cs;
- excitation by radiation in the visible spectral range - emission in the IR range. These properties are inherent to a neodymium oxide activated with rare earth elements of the formula Nd₂O₂:Cs;
- excitation in IR rays - emission in IR rays. These properties are inherent to anti-Stokes inorganic phosphors of the formulas: Y₂O₂S; La₂O₂S; LaGaO₃; Gd₂O₂S; Y₂O₃; Gd₂O₃; YbNa(WO₄)₂; LaGdO₃. Manganese, silver, copper, rare earth elements are used as the activators.

Surface-active substances (surfactants) based on fatty acids, e.g., a powder of stearic acid and its derivatives (zinc or aluminum stearates), and also synthetic wax powders and/or paraffin powders can be used as the binding/lubricating agent. A uniform distribution of the marking component in the metal powder is achieved by means of the present composition.

Polyatomic phenols being dihydroxybenzenes may be further added to the binding/lubricating agent to remove an oxide film from the surface of the metal powder for a purpose of improving the bulk sintering. The dihydroxybenzenes are strong reducing agents and are able to clean the metal surface in the powder from oxides.

Pyrocatechol, resorcinol, hydroquinone, pyrogallol, oxyhydroquinoline, fluoroglycine are used as the dihydroxybenzenes.

The objective can be further attained by a method for marking metal products, comprising mixing a metal alloy powder with a marking composition consisting of at least one inorganic substance (e.g., a salt of a rare earth metal), which has the property to exhibit luminescence when irradiated, and a binding/lubricating agent as which a mixture of fatty acid derivatives with polyatomic phenols, or a mixture of synthetic wax powders and/or paraffin powders added with polyatomic phenols is used. Thereafter, the resultant mixture is compacted and is then sintered at a temperature not higher than 900°C using an energy source for bulk sintering of the mass of products.

The marking composition as described above is used in the method.

For marking according to the present invention, a metal powder used as a construction material is mixed in a conventional mixer with a preliminary prepared marking composition. The powders are being mixed until the marker (indicator) powder is evenly distributed in the construction material.

The detection of the hidden security element is carried out by irradiating the product or a part thereof with any radiation in spectral ranges invisible to the naked eye, and then detecting (registering) an emission of the phosphor. Most preferably, the irradiation is carried out by a radiation in infrared (IR) range, near infrared (long-wavelength) (NIR) range, or ultraviolet (UV) spectral range.

### Brief Description of the Drawings

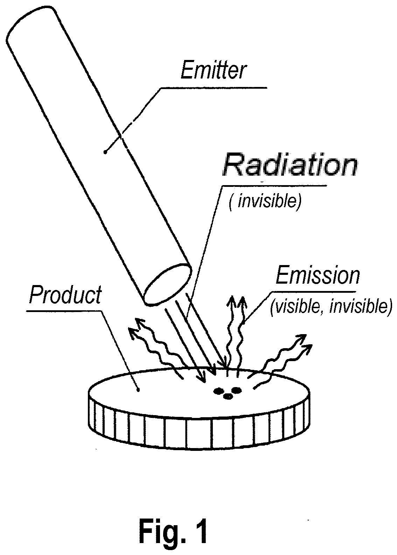

Fig. 1 shows schematically the study of a fragment of a product manufactured by the marking method according to the invention.

### Best Mode of Embodying the Invention

A fragment of a product produced by sintering is irradiated by an UV light source. A luminescent emission emitted thereby is detected by a device (not shown) and/or visually.

Excitation of phosphors used is performed by radiation sources with the excitation frequency required to excite the phosphor used.

The use of a method for detecting the excitation depends on the phosphor used.

To avoid a change in characteristics of the alloy and a disturbance in its treatment conditions, a substance amount of the marking composition in the mixture prepared for compacting should be less than or equal to 2 wt.% by weight of the metal powder.

By carrying out this method of manufacturing, it is possible to mark multilayer products and monolithic products manufactured by a powder metallurgy technique with a heat treatment at a sintering temperature not higher than 900°C, which ensures their reliable identification during a long period.

The present method guarantees preservation of the identification properties regardless of the conditions of storage and usage of the products. Also, the method involves performing an analysis for detecting a data about the object from its fragment.

Another subject-matter of the group of inventions is a metal product manufactured by a compaction method according to powder metallurgy techniques. In the manufacturing process thereof, a preliminary prepared marking composition is added to a metal powder, the marking composition consisting of at least one inorganic substance (e.g., a salt of a rare earth metal), which has the property to exhibit luminescence when irradiated, and a binding/lubricating agent as which a mixture of fatty acid derivatives with polyatomic phenols, or a mixture of synthetic wax powders and/or paraffin powders added with polyatomic phenols is used.

The product according to the invention is produced by using the marking method and the marking composition both described above.

The resulting product with a security feature may be formed in any shape. The products can be exemplified by coins, tokens, medals, etc.

It is also possible to produce combined products consisting of a monometallic substrate or a substrate produced by powder metallurgy technique, on top of which an art article made by the present method is applied. Term "applied" in this context implies direct pressing of the material with the security feature (art article) onto a surface of the substrate and a subsequent heat treatment at a temperature not higher than 900°C.

Bases (substrates) of the product in the context of the present invention generally are constituent parts of devices, assemblies, mechanisms or parts for them, for example, for such devices as vehicles, household appliances. Thus, the resulting product can work as a marker on other products.

It should be emphasized that the features of dependent claims and the embodiments of the invention set forth in the description can be used in combination or separately, independently from each other and from the subject-matter of independent claims.

The following examples are presented as the information supporting the feasibility of the invention.

Example 1 (Comparative). A marking composition comprising 40 wt.% of a phosphor and 60 wt.% of a binding/lubricating agent was prepared for marking metal products fabricated by powder metallurgy technique.

Inorganic phosphors based on barium phosphates activated with manganese, having thermal resistance above 1000°C and not reacting with the metal powders used for manufacture of the products were used as the phosphor.

The composition comprises stearic acid as the binding/lubricating agent.

Example 2 (Comparative). Everything was done as in Example 1, but inorganic compounds based on yttrium oxides activated with cerium, and inorganic compounds based on beryllium silicates activated with terbium were used as the phosphor.

Example 3. Everything was done as in Example 1, but a mixture of fatty acid derivatives with dihydroxybenzene was used as the binding/lubricating agent. Pyrocatechol was used as the dihydroxybenzene.

Example 4. Everything was done as in Example 1, but a mixture of synthetic wax and paraffin powders with dihydroxybenzene was used as the binding/lubricating agent. Resorcinol was used as the dihydroxybenzene.

Example 5. Everything was done as in Example 1, but as the binding/lubricating agent the composition contained aluminum or zinc stearate mixed with hydroquinone or oxyhydroquinoline, respectively.

Example 6. Everything was done as in Example 1, but as the binding/lubricating agent the composition contained synthetic wax or paraffin powders mixed with pyrogallol or fluoroglycine, respectively.

Example 7 (Comparative). For marking a metal product, i.e. a token, a composition was prepared from strontium vanadate activated with tin, and stearic acid. This composition was mixed with a metal alloy powder. The resulting mixture was compacted and was subjected to sintering.

Example 8. In order to produce a combined product, an art article produced by mixing a preliminary prepared mixture of magnesium phosphate and synthetic wax and paraffin powders with a powder metal alloy was applied by direct pressing onto a surface of a monometallic substrate. Thereafter, the combined product was subjected to a heat treatment at a temperature not higher than 900°C.

The present method for marking metal products produced by powder metallurgy technique and using the inventive marking composition ensures a reliable marking which is preserved well over a long period of time and allows identification of not only the entire products, but their parts as well. This marking technology is simple, requires no additional treatment of the final products, and also is harmless as it is carried out without direct human involvement and without any contact with harmful substances.

### Industrial Applicability

The invention is applicable in the field of chemistry and is intended to protect valuable material objects against counterfeit and theft by way of introducing a hidden identification mark, as well as a marking identifiable by performing a special exhibiting procedure, for detecting the object or for revealing a data about it.

The present marking can be employed throughout the bulk of a product, or in a portion of the bulk of the product, for identification of coins, tokens, medals or constituent parts of devices, assemblies, and mechanisms, or spare parts for them, for example, of various vehicles, household appliances made by powder metallurgy technique at a temperature of sintering in inert gas atmosphere not higher than 900°C.

## Claims

1. An inorganic phosphor-based composition for marking metal products produced by powder metallurgy technique, said composition including a phosphor, **characterized in that** the composition comprises a binding/lubricating agent as which a mixture of fatty acid derivatives with polyatomic phenols, or a mixture of synthetic wax powders and/or paraffin powders added with polyatomic phenols is used, at the following component ratio in wt.%:
| | |
|---|---|
| the phosphor - | no more than 50%, |
| the binding/lubricating agent - | 50 wt.% or more. |

2. A composition for marking metal products according to claim 1, **characterized in that** as the phosphor the composition comprises at least one inorganic compound having a thermal stability over 1000°C and not reacting with powders of metals used for manufacture of the products.

3. A composition according to claim 1, **characterized in that** as the phosphor the composition comprises inorganic compounds based on phosphates, vanadates and/or silicates of barium, strontium, magnesium, beryllium, yttrium activated with tin, titanium, manganese, europium, terbium, ytterbium, erbium; based on oxides, oxysulfides, borates of yttrium, gadolinium activated with cerium, europium, terbium, praseodymium, ytterbium and erbium.

4. A composition according to claim 1, **characterized in that** as the binding/lubricating agent the composition comprises stearic acid and its derivatives, for example stearates of zinc or of aluminum.

5. A composition according to claim 1, **characterized in that** the composition comprises dihydroxybenzenes as the polyatomic phenols.

6. A composition according to claim 5, **characterized in that** pyrocatechol, resorcinol, hydroquinone, pyrogallol, oxyhydroquinoline, fluoroglycine are used as the dihydroxybenzenes.

7. A composition for marking metal products according to claim 1, **characterized in that** the phosphor consists of compounds emitting one wavelength, or includes different compounds **characterized by** different wavelengths or by a range of wavelengths.

8. A method for marking metal products, comprising mixing a metal alloy powder with a marking composition, **characterized in that** the alloy powder is mixed with a preliminary prepared marking composition defined in any one of claims 1 to 7 and consisting of at least one inorganic substance having the property to exhibit luminescence when irradiated, and a binding/lubricating agent as which a mixture of fatty acid derivatives with polyatomic phenols, or a mixture of synthetic wax powders and/or paraffin powders added with polyatomic phenols is used, followed by compacting the resultant mixture and sintering at a temperature not higher than 900°C.

9. A metal product produced by a compaction method according to powder metallurgy technique, **characterized in that**, in the process of its manufacture, a preliminary prepared marking composition according to claims 1 to 7 is added to a metal powder.

10. A product according to claim 9, **characterized in that** the product is produced by means of the method for marking according to claim 8.

11. A product according to claim 9, **characterized in that** the product is made as a combined product consisting of a monometallic substrate or a substrate produced by powder metallurgy technique, on top of which an art article produced by the method according to claim 8 is applied.

12. A product according to claim 11, **characterized in that** the art article is applied by direct pressing onto a base surface and then subjecting to a heat treatment at a temperature not higher than 900°C.

13. A product according to claim 11, **characterized in that** constituent parts of devices, assemblies or mechanisms, or spare parts for them may be used as the substrate.

## Patentansprüche

1. Eine anorganische Zusammensetzung auf Phosphorbasis zur Markierung von, durch pulvermetallurgische Technik hergestellte Metallprodukte, wobei die Zusammensetzung einen Phosphor umfasst, **dadurch gekennzeichnet dass** die Zusammensetzung ein Binde-/Schmiermittel umfasst, für welches ein Gemisch aus Fettsäurederivaten mit mehratomischen Phenolen oder ein Gemisch aus synthetischen Wachspulvern und/oder Paraffinpulvern, zugesetzt mit mehratomischen Phenolen, mit folgendem Bestandteilverhältnis in Gewichts-% benutzt wird:
| | |
|---|---|
| der Phosphor - | nicht mehr als 50% |
| das Binde-/Schmiermittel - | 50 Gew.-% oder mehr. |

2. Eine anorganische Zusammensetzung zur Markierung von Metallprodukten nach Anspruch 1, **dadurch gekennzeichnet dass** der Phosphor der Zusammensetzung mindestens eine anorganische Verbindung mit einer thermischen Stabilität von über 1000 °C umfasst, und nicht mit den, für die Herstellung der Produkte verwendeten Metallpulvern reagiert.

3. Eine Zusammensetzung nach Anspruch 1, **dadurch gekennzeichnet dass** der Phosphor der Zusammensetzung anorganische Verbindungen auf der Basis von Phosphor, Vanadaten und/oder Silikaten von Barium, Strontium, Magnesium, Beryllium, Yttrium umfasst, aktiviert durch Zinn, Titan, Mangan, Europium, Terbium, Ytterbium, Erbium; basierend auf Oxide, Oxysulfide, Borate von Yttrium, Gadolinium, aktiviert durch Cerium, Europium, Terbium, Praseodym, Ytterbium und Erbium.

4. Eine Zusammensetzung nach Anspruch 1, **dadurch gekennzeichnet dass** das Binde-/Schmiermittel der Zusammensetzung Stearinsäure und deren Derivate umfasst, zum Beispiel Zink- oder Aluminiumstearate.

5. Eine Zusammensetzung nach Anspruch 1, **dadurch gekennzeichnet dass** die Zusammensetzung Dihydroxybenzole, wie die mehratomigen Phenole umfasst.

6. Eine Zusammensetzung nach Anspruch 5, **dadurch gekennzeichnet dass** Pyrocatechol, Resorcin, Hydrochinon, Pyrogallol, Oxyhydrochinolin, Fluoroglucin als Dihydroxybenzole verwendet werden.

7. Eine anorganische Zusammensetzung zur Markierung von Metallprodukten nach Anspruch 1, **dadurch gekennzeichnet dass** der Phosphor aus Verbindungen besteht, die eine Wellenlänge emittieren, oder mehrere, durch verschiedene Wellenlängen oder durch einer Reihe von Wellenlängen gekennzeichnete Verbindungen umfasst.

8. Ein Verfahren zur Markierung von Metallprodukten, das die Mischung eines Metallegierungspulvers mit einer Markierungszusammensetzung umfasst, **dadurch gekennzeichnet dass** das Metallegierungspulver mit einer zuvor vorbereiteten Markierungszusammensetzung nach einem der Ansprüchen 1 bis 7 gemischt wird und aus mindestens einer anorganischen Substanz besteht, welche die Eigenschaft aufweist bei Bestrahlung zu leuchten, und wobei ein Binde-/Schmiermittel für welches ein Gemisch aus Fettsäurederivaten mit mehratomischen Phenolen oder ein Gemisch aus synthetischen Wachspulvern und/oder Paraffinpulvern, zugesetzt mit mehratomischen Phenolen, benutzt wird, gefolgt von der Verdichtung des resultierenden Gemisches und des Sinterns bei einer Temperatur die nicht höher als 900 °C ist.

9. Ein Metallprodukt, hergestellt durch ein Verdichtungsverfahren nach pulvermetallurgischer Technik, **dadurch gekennzeichnet dass** beim Verfahren zur dessen Herstellung eine zuvor vorbereitete Markierungszusammensetzung nach einem der Ansprüche 1 bis 7 einem Metallpulver zugesetzt wird.

10. Ein Produkt nach Anspruch 9, **dadurch gekennzeichnet dass** das Produkt mittels des Markierungsverfahrens gemäß Anspruch 8 hergestellt wird.

11. Ein Produkt nach Anspruch 9, **dadurch gekennzeichnet dass** das Produkt als ein kombiniertes Produkt bestehend aus einem monometallischen Substrat oder einem, nach pulvermetallurgischer Technik hergestellten Substrat hergestellt wird, worauf eine aus dem Verfahren hervorgehende Markierung gemäß Anspruch 8 angewendet wird.

12. Ein Produkt nach Anspruch 11, **dadurch gekennzeichnet dass** die Markierung durch direktes Aufpressen auf eine Grundoberfläche und durch anschließendes Unterziehen einer Hitzebehandlung bei einer nicht höheren Temperatur als 900 °C angewendet wird.

13. Ein Produkt nach Anspruch 11, **dadurch gekennzeichnet dass** die Bestandteile der Vorrichtungen, der Baugruppen oder der Mechanismen, oder deren Ersatzteile als das Substrat verwendet werden können.

## Revendications

1. Composition inorganique à base de luminophore pour le marquage de produits métalliques obtenus par métallurgie des poudres, ladite composition comprenant un luminophore, **caractérisée en ce que** la composition comprend un agent liant/lubrifiant pour lequel on utilise un mélange de dérivés d'acides gras avec des phénols polyatomiques, ou un mélange de poudres de cire synthétiques et/ou des poudres de paraffine auxquels sont ajoutés des phénols polyatomiques, selon un rapport des composants suivants en % en poids :
| | |
|---|---|
| le luminophore | pas plus de 50%, |
| l'agent liant/lubrifiant | 50% en poids ou plus. |

2. Composition de marquage de produits métalliques selon la revendication 1, **caractérisée en ce que** en tant que luminophore, la composition comprend au moins un composé inorganique ayant une stabilité thermique supérieure à 1000° C et ne réagissant pas avec des poudres de métaux utilisés pour la fabrication des produits.

3. Composition selon la revendication 1, **caractérisée en ce que** en tant que luminophore, la composition comprend des composés inorganiques à base de phosphates, de vanadates et/ou de silicates de baryum, strontium, magnésium, béryllium, yttrium activés à l'étain, titane, manganèse, europium, terbium, ytterbium, erbium ; à base d'oxydes, d'oxysulfures, de borates d'yttrium, de gadolinium activés au cérium, europium, terbium, praséodyme, ytterbium et erbium.

4. Composition selon la revendication 1, **caractérisée en ce que**, en tant qu'agent liant/lubrifiant, la composition comprend de l'acide stéarique et ses dérivés, par exemple des stéarates de zinc ou d'aluminium.

5. Composition selon la revendication 1, **caractérisée en ce que** la composition comprend des dihydroxybenzènes en tant que phénols polyatomiques.

6. Composition selon la revendication 5, **caractérisée en ce qu'**on utilise en tant que dihydroxybenzènes, le pyrocatéchol, le résorcinol, l'hydroquinone, le pyrogallol, l'oxyhydroquinoline, la fluoroglycine.

7. Composition pour le marquage de produits métalliques selon la revendication 1, **caractérisée en ce que** le luminophore est constitué de composés émettant une longueur d'onde, ou comprend différents composés **caractérisés par** différentes longueurs d'onde ou par une gamme de longueurs d'onde.

8. Procédé de marquage de produits métalliques, comprenant les étapes consistant à mélanger une poudre d'alliage métallique avec une composition de marquage, **caractérisé en ce que** la poudre d'alliage est mélangée avec une composition de marquage préalablement préparée telle que définie dans une quelconque des revendications 1 à 7 et constituée d'au moins une substance inorganique ayant la propriété de présenter une luminescence lorsqu'elle est irradiée, et un agent liant/lubrifiant pour lequel on utilise un mélange de dérivés d'acides gras avec des phénols polyatomiques, ou un mélange de poudres de cire synthétiques et/ou des poudres de paraffine auxquels sont ajoutés des phénols polyatomiques, suivi d'un compactage du mélange résultant et d'un frittage à une température non supérieure à 900° C.

9. Produit métallique produit par un procédé de compactage selon la technique de la métallurgie des poudres, **caractérisé en ce que**, dans le procédé de sa fabrication, on ajoute à la poudre métallique une composition de marquage préalablement préparée selon les revendications 1 à 7.

10. Produit selon la revendication 9, **caractérisé en ce que** le produit est fabriqué au moyen du procédé de marquage selon la revendication 8.

11. Produit selon la revendication 9, **caractérisé en ce que** le produit est réalisé sous la forme d'un produit combiné constitué d'un substrat monométallique ou d'un substrat réalisé par la technique de la métallurgie des poudres, sur lequel un élément de marquage obtenu par le procédé selon la revendication 8 est appliqué.

12. Produit selon la revendication 11, **caractérisé en ce que** l'élément de marquage est appliqué par pressage direct sur une surface de base suivi de la soumission à un traitement thermique à une température non supérieure à 900° C.

13. Produit selon la revendication 11, **caractérisé en ce qu'**on utilise comme substrat des parties constitutives de dispositifs, d'ensembles ou de mécanismes, ou de pièces de rechange pour ceux-ci.
